# EUROPÄISCHE PATENTSCHRIFT

(11) **EP 2 825 745 B1**
(45) Veröffentlichungstag und Bekanntmachung des Hinweises auf die Patenterteilung: **18.07.2018**
(21) Anmeldenummer: 13707667.5
(22) Anmeldetag: 07.03.2013
(51) Int. Cl.: F02B 37/16, F02B 37/18, F04D 27/00

(54) **ABGASTURBOLADER MIT EINEM WASTEGATEVENTIL UND EINEM SCHUBUMLUFTVENTIL**
TURBOCHARGER WITH A WASTEGATE AND A RECIRCULATION VALVE
TURBOCOMPRESSEUR À GAZ D'ÉCHAPPEMENT PRÉSENTANT UNE SOUPAPE DE DÉCHARGE DE GAZ D'ÉCHAPPEMENT ET UNE SOUPAPE DE SURPRESSION

(30) Priorität: 13.03.2012 DE 102012203849
(43) Veröffentlichungstag der Anmeldung: 21.01.2015
(73) Patentinhaber: Continental Automotive GmbH, 30165 Hannover (DE)
(72) Erfinder: KRONSCHNABL, Florian, 93049 Regensburg (DE); HERFURTH, Roland, 93051 Regensburg (DE); SPARRER, Christoph, 93053 Regensburg (DE)
(86) Internationale Anmeldenummer: PCT/EP2013/054572
(87) Internationale Veröffentlichungsnummer: WO 2013/135548

(56) Entgegenhaltungen:
- DE-A1-102008 045 871
- JP-A- S6 116 230
- US-A- 3 174 275

## Beschreibung

Die Erfindung betrifft einen Abgasturbolader, der ein Wastegateventil und ein Schubumluftventil aufweist.

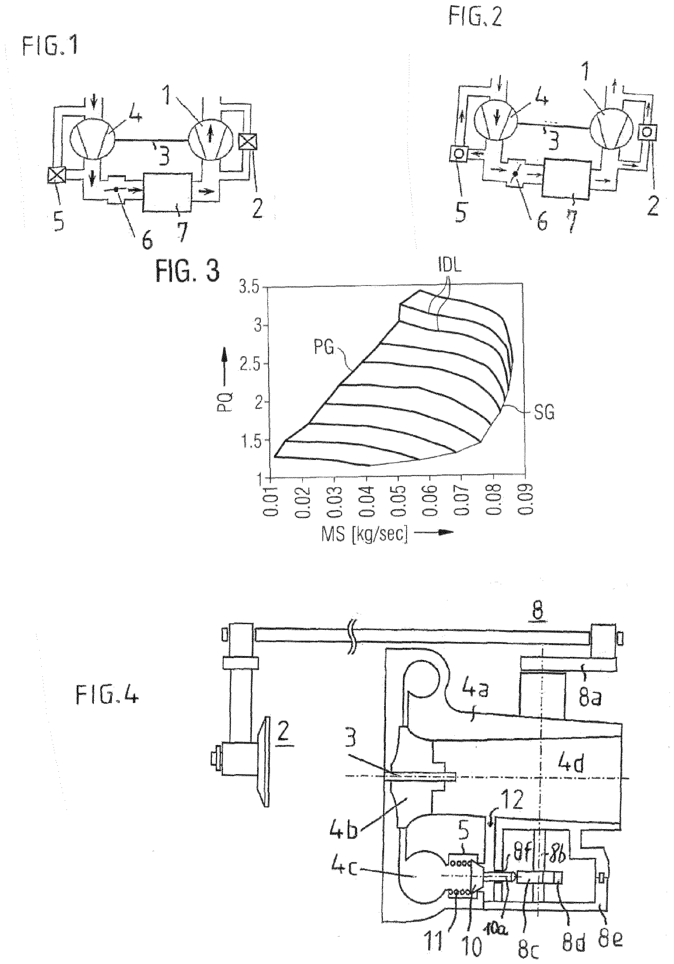

Ein Verbrennungsmotor, der von einem Abgasturbolader aufgeladen wird, zeichnet sich durch die folgende Anordnung der Führung von Frischluft und Abgas aus:
Im normalen, aufgeladenen Betrieb strömt das Abgas aus dem Verbrennungsmotor in eine Turbine und setzt deren Turbinenrad in Drehung. Da das Turbinenrad über eine gemeinsame Welle mit dem Verdichterrad des Abgasturboladers verbunden ist, dreht sich das Verdichterrad ebenfalls und verdichtet die Luft im Ansaugtrakt vor dem Einlass in den Verbrennungsmotor. Auf diese Weise kann mehr Kraftstoff pro Zylinderhub zugemischt werden. Dadurch wird das Drehmoment des Verbrennungsmotors erhöht. Dieser Betriebszustand ist in der Figur 1 dargestellt. Dort sind die Turbine 1, das Wastegateventil 2, die Welle 3, der Verdichter 4, das Schubumluftventil 5, die Drosselklappe 6 und der Verbrennungsmotor 7 gezeigt. Es ist ersichtlich, dass das Wastegateventil 2 geschlossen ist, das Schubumluftventil 5 geschlossen ist und die Drosselklappe 6 ganz geöffnet ist. Eine Regelung der Aufladung kann dadurch erfolgen, dass ein Teil des Abgasmassenstroms durch das Wastegateventil am Turbinenrad vorbeigeführt wird.

Es wird darauf hingewiesen, dass in der Figur 1 einige Elemente der Luftführung aus Gründen der Übersichtlichkeit nicht gezeichnet sind. Dazu gehören beispielsweise ein vor dem Verdichter angeordneter Luftfilter, ein vor dem Verdichter angeordneter Luftmengenmesser, ein nach dem Verdichter angeordneter Ladeluftkühler, eine nach der Drosselklappe angeordnete Tank/Kurbelgehäuse-Entlüftung und ein nach der Turbine angeordneter Katalysator. Auch von einer Darstellung einer ggf. vorhandenen Abgasrückführung oder einer Sekundärlufteinblasung wurde abgesehen.

Wenn nun der Fahrer vom Gas geht, geht der Verbrennungsmotor vom aufgeladenen Betrieb in den gedrosselten Betrieb bzw. Schubbetrieb über. Dabei wird das Wastegateventil 2 geöffnet und die Drosselklappe 6 geschlossen. Der Rotor des Abgasturboladers dreht sich zunächst aufgrund seiner Massenträgheit und bedingt durch das endlich schnelle Öffnungsverhalten des Wastegateventils noch mit hoher Geschwindigkeit weiter, so dass der Verdichter weiter Frischluft fördert. Wenn der Verdichter weiter fördert, der Verbrennungsmotor aber weniger Frischluft als im vorherigen Betriebszustand entgegennimmt, wird mit sich verringerndem Luftmassenstrom der Druck nach dem Verdichter steigen.

Die Figur 3 zeigt das Kennfeld eines Verdichters eines Abgasturboladers. Dabei ist längs der Abszisse der Massenstrom MS und längs der Ordinate das Druckverhältnis PQ aufgetragen. Mit PG ist die Pumpgrenze und mit SG die Stopfgrenze bezeichnet. Bei IDL handelt es sich um Iso-Drehzahl-Linien.

Aus der Figur 3 ist ersichtlich, dass der stabile Betrieb eines Verdichters im Bereich kleiner Durchsätze von der Pumpgrenze PG begrenzt wird. Beim Überschreiten der Pumpgrenze ist der Verdichter nicht mehr in der Lage, gegen das hohe Druckniveau zu fördern. Es kommt zu einem Zurückströmen der angestauten Luft über den Verdichter, dem sogenannten Pumpen. Dieses Verdichterpumpen sollte vermieden werden, da die auftretenden Druckschwankungen zu starken mechanischen Belastungen führen. Des Weiteren wird das Pumpen als unangenehmes Geräusch empfunden.

Um das Pumpen des Verdichters in dem beschriebenen Fall zu vermeiden, kann verdichtete Frischluft durch das Schubumluftventil nach dem Verdichter abgeblasen werden. Um die Messung des Luftmassenmessers nicht zu verfälschen ist es vorteilhaft, die abgeblasene Luft vor dem Verdichter wieder in den Ansaugtrakt einzubringen, so dass der Verdichter die Luft im Kreis fördert. Ist der Übergang in den gedrosselten Motorbetrieb nur von kurzer Dauer, beispielsweise im Bereich von ein bis zwei Sekunden, wie es bei einem Schaltvorgang der Fall ist, dann werden bei anschließender erneut hoher Drehmomentanforderung an den Motor das Schubumluftventil und das Wastegateventil wieder geschlossen. Der Rotor des Abgasturboladers behält während dieser kurzen Dauer annähernd seine Drehzahl bei und erreicht nach dem Einkuppeln sehr schnell wieder das geforderte Ladedruckniveau.

In der Figur 2 ist dieser gedrosselte bzw. Schubbetrieb veranschaulicht. Dort ist ersichtlich, dass das Wastegateventil geöffnet, das Schubumluftventil 5 ebenfalls geöffnet und die Drosselklappe 6 geschlossen ist.

Es ist bekannt, das Wastegateventil mittels eines eigenen, dem Wastegateventil zugeordneten Aktuators zu betätigen. Des Weiteren ist es bekannt, auch das Schubumluftventil mittels eines eigenen, dem Schubumluftventil zugeordneten Aktuators zu betätigen. Das Stellglied des Wastegateventils und das Stellglied des Schubumluftventils werden jeweils einzeln mittels einer eigenen Versorgungsleitung, die elektrisch oder pneumatisch arbeiten kann, angesteuert. Dies bringt neben hohen Kosten auch Nachteile im Hinblick auf das Packaging des Abgasturboladers mit sich, da die Aktuatoren am Turbolader angebracht werden müssen und somit den Bauraum erhöhen, den der Abgasturbolader im Motorraum beansprucht.

Aus der DE 10 2008 045 871 A1 ist ein Turbolader bekannt, der ein Wastegateventil und ein Schubumluftventil aufweist, wobei das Schubumluftventil und das Wastegateventil mittels eines einzigen Stellgeräts bedienbar sind und wobei das Wastegateventil und das Schubumluftventil mittels eines Verbindungsglieds mechanisch koppelbar sind.

Die Aufgabe der Erfindung besteht darin, einen weiter verbesserten Abgasturbolader anzugeben.

Diese Aufgabe wird durch einen Abgasturbolader mit den im Anspruch 1 angegebenen Merkmalen gelöst. Vorteilhafte Ausgestaltungen und Weiterbildungen der Erfindung sind in den abhängigen Ansprüchen angegeben.

Ein Abgasturbolader gemäß der Erfindung weist ein Wastegateventil und ein Schubumluftventil auf, die beide von einem einzigen, gemeinsamen Aktuator betätigbar sind, wobei die Betätigung des Schubumluftventils von der Stellgeschwindigkeit des Aktuators abhängig ist, wobei das Schubumluftventil mittels eines Dämpfers mit dem Aktuator derart gekoppelt ist, dass bei einer geringen Stellgeschwindigkeit des Aktuators, die kleiner ist als eine Grenzdrehgeschwindigkeit einer Abtriebswelle des Aktuators, das Schubumluftventil geschlossen bleibt, und bei einer hohen Stellgeschwindigkeit des Aktuators, die größer ist als die Grenzdrehgeschwindigkeit der Abtriebswelle des Aktuators, das Schubumluftventil geöffnet wird, und dass die Öffnung des Schubumluftventils gegen eine Federvorspannung erfolgt.

Daraus ergeben sich die folgenden Vorteile: Da nur ein einziger Steller mit zugehöriger Ansteuerung notwendig ist, ergeben sich Kostenvorteile. Durch ein Zusammenfassen von zwei Stellern zu einem einzigen Steller ergibt sich neben dem Kostenvorteil auch ein reduzierter Platzbedarf. Dieser einzige Steller wird mittels einer einzigen Energieform, beispielsweise elektrisch, gespeist. Gegenüber einem Lader mit elektrischem Wastegatesteller und pneumatisch gesteuertem Schubumluftventil reduziert sich die Komplexität der Ansteuerung, da nur ein Versorgungsmedium verwendet wird. Ein elektrischer Steller zur Betätigung des Wastegateventils verfügt in der Regel über einen Positionssensor. Dieser kann aufgrund der erfindungsgemäßen gekoppelten Kinematik auch für die Positionsbestimmung des Schubumluftventils genutzt werden. Somit ergibt sich in vorteilhafter Weise eine zusätzliche Fehlerdiagnosemöglichkeit.

Weitere vorteilhafte Eigenschaften der Erfindung ergeben sich aus deren nachfolgender Erläuterung anhand der weiteren Zeichnungen. Es zeigt:
- Figur 4: eine Schnittdarstellung des Verdichtergehäuses einer bekannten Ausführung eines Abgasturboladers mit nur einem integriertem elektrischen Steller zur gekoppelten Betätigung von Wastegateventil und Schubumluftventil,
- Figur 5: Darstellungen der in der Figur 4 gezeigten Nockenscheibe der bekannten Ausführung eines Abgasturboladers in drei verschiedenen Winkelstellungen der Abtriebswelle des Aktuators,
- Figur 6: Diagramme zur Veranschaulichung des Zusammenhangs zwischen dem Aktuatorwinkel und dem Öffnungsverhalten des Wastegateventils und des Schubumluftventils der bekannten Ausführung des Abgasturboladers der Figur 4,
- Figur 7: Darstellungen eines mittels eines Dämpfers mit dem Aktuator gekoppelten Schubumluftventils in drei verschiedenen Winkelstellungen der Abtriebswelle des Aktuators, gemäß einer erfindungsgemäßen Ausführung des Abgasturboladers,
- Figur 8: Diagramme zur Veranschaulichung des Zusammenhangs zwischen dem Aktuatorwinkel und dem Öffnungsverhalten des Wastegateventils und des Schubumluftventils bei geringer Stellgeschwindigkeit, bei einer erfindungsgemäßen Ausführung des Abgasturboladers gemäß Figur 7,
- Figur 9: Diagramme zur Veranschaulichung des Zusammenhangs zwischen dem Aktuatorwinkel und dem Öffnungsverhalten des Wastegateventils und des Schubumluftventils bei hoher Stellgeschwindigkeit.

Die Figur 4 zeigt eine schematische Schnittdarstellung des Verdichtergehäuses 4a einer bekannten Ausführung eines Abgasturboladers mit integriertem elektrischen Steller 8 und einem Schubumluftventil 5. Das Verdichtergehäuse 4a weist ein Verdichterrad 4b, einen hinter dem Verdichterrad angeordneten Ausgangsbereich 4c und einen vor dem Verdichterrad angeordneten Eingangsbereich 4d auf. Durch den Eingangsbereich 4d wird dem Verdichterrad zu verdichtende Luft zugeführt. Im Ausgangsbereich 4c liegt die mittels des Verdichterrades verdichtete Luft vor, die dem Verbrennungsmotor zugeführt wird.

Der Ausgangsbereich 4c ist mit einem Schubumluftventil 5 verbunden. Im geöffneten Zustand des Schubumluftventils 5 wird verdichtete Luft aus dem Ausgangsbereich 4c durch das Schubumluftventil 5 und einen Rückströmkanal 12 in den Eingangsbereich 4d des Verdichtergehäuses 4a zurückgeführt.

Zum Verschließen des Schubumluftventils 5 ist ein mit einer Druckfeder 11 gekoppelter Stößel 10 vorgesehen, der einen linearen Fortsatz 10a aufweist, welcher durch einen Durchbruch 8f in einem Deckel 8e eines als Aktuator dienenden Stellers 8 geführt ist. Zwischen dem Durchbruch 8f und dem linearen Fortsatz 10a ist eine Dichtung vorgesehen.

Der Stößel 10 steht über seinen linearen Fortsatz 10a mit einer Scheibe 8c in Wirkverbindung, wobei am Außenmantel dieser Scheibe ein Nocken 8d vorgesehen ist. Die Scheibe 8c ist mit der Abtriebswelle 8b des elektrischen Stellers 8 drehfest verbunden. Die Abtriebswelle 8b ist mit einem Abtriebshebel 8a des elektrischen Stellers 8 gekoppelt.

Der elektrische Steller 8 steht des Weiteren mit einem Deckel eines am Turbinengehäuse des Abgasturboladers vorgesehenen Wastegateventils 2 in Verbindung, um je nach Bedarf das Wastegateventil zu verschließen oder zu öffnen.

Folglich sind beim gezeigten Ausführungsbeispiel das Wastegateventil und das Schubumluftventil des Abgasturboladers von einem einzigen, gemeinsamen Aktuator betätigbar.

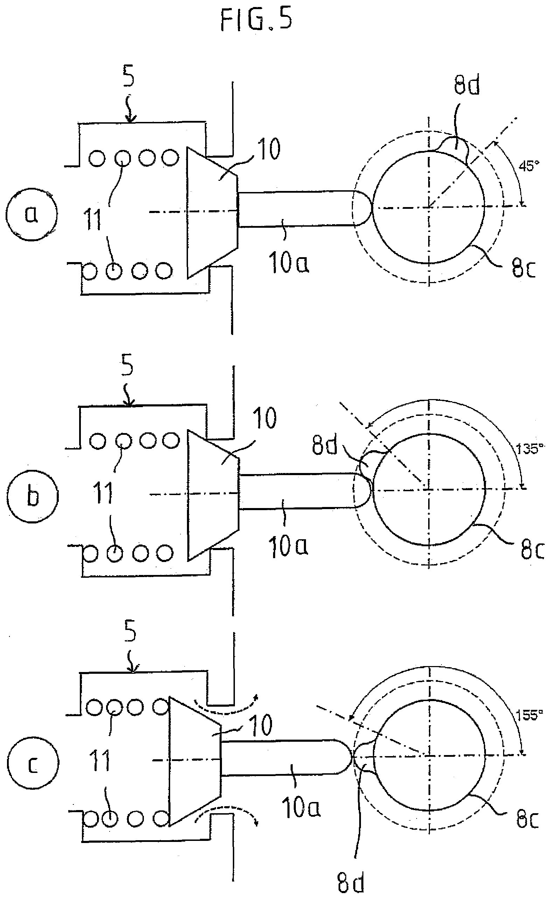

Die Figur 5 zeigt Darstellungen der in der Figur 4 gezeigten Scheibe 8c des bekannten Abgasturboladers in drei verschiedenen Winkelstellungen der Abtriebswelle des Aktuators. So befindet sich in der Figur 5a die Scheibe 8c in einer Winkelstellung von 45° und in der Figur 5b in einer Winkelstellung von 135°. In dem Winkelbereich zwischen 45° und 135° erfolgt eine Öffnung des Wastegateventils, wobei das Schubumluftventil im geschlossenen Zustand bleibt. Ab einer Winkelstellung von 135° wird zusätzlich zur Öffnung des Wastegateventils auch das Schubumluftventil geöffnet. Dabei ist in der Figur 5c eine Winkelstellung von 155° gezeigt, in welcher der am Außenumfang der Scheibe 8c vorgesehene Nocken 8d den linearen Fortsatz 10a des Stößels 10 und damit auch den Stößel 10 selbst in der Figur nach links gedrückt hat, so dass das Schubumluftventil 5 im geöffneten Zustand ist.

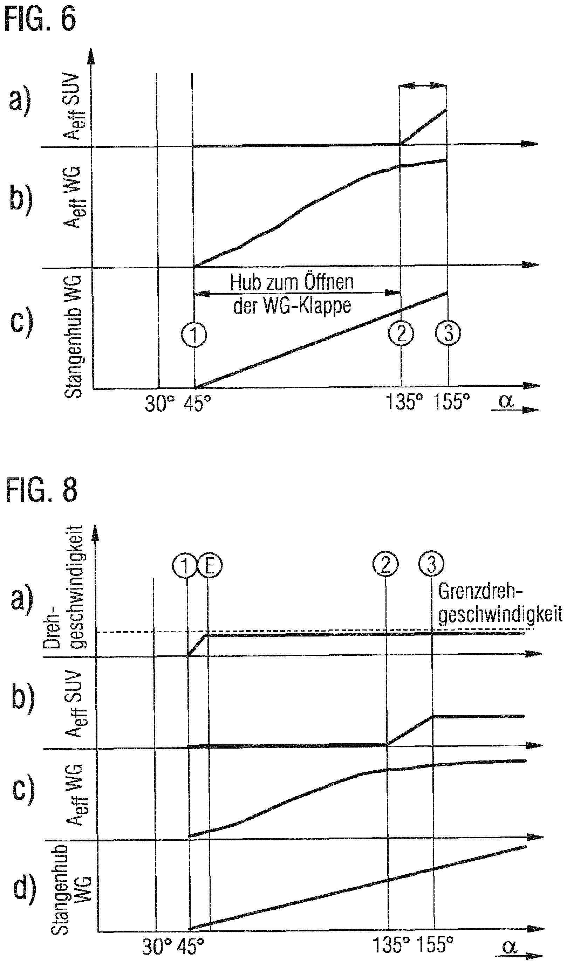

Die Figur 6 zeigt Diagramme zur Veranschaulichung des Zusammenhangs zwischen dem Aktuatorwinkel und dem Öffnungsverhalten des Wastegateventils und des Schubumluftventils für die in den Figuren 4 und 5 dargestellte bekannte Ausführung des Abgasturboladers. Dabei ist in der Figur 6a das Öffnungsverhalten des Schubumluftventils, in der Figur 6b das Öffnungsverhalten des Wastegateventils und in der Figur 6c der Stangenhub der Regelstange des Aktuators gezeigt, wobei jeweils längs der Abszisse der Drehwinkel α der Abtriebswelle des Aktuators aufgetragen ist. Es ist ersichtlich, dass zwischen der Winkelstellung 1 (45°) und der Winkelstellung 2 (135°) sich lediglich die Öffnungsposition des Wastegateventils verändert, während das Schubumluftventil geschlossen bleibt. Erst dann, wenn der Drehwinkel α der Abtriebswelle des Aktuators größer wird als 135°, also zwischen der Winkelstellung 2 (135°) und der Winkelstellung 3 (155°), wird auch das Schubumluftventil geöffnet.

Die anhand der Figur 6 erläuterte kinematische Abhängigkeit hat allerdings den Nachteil, dass ein Öffnen des Schubumluftventils erst nach einer vollständigen Öffnung des Wastegateventils möglich ist. Um diesen Nachteil zu beseitigen und das Schubumluftventil und das Wastegateventil bei Bedarf gleichzeitig öffnen zu können, wird bei einer erfindungsgemäßen Ausführung des Abgasturboladers in vorteilhafter Weise das Schubumluftventil mittels eines Dämpfers mit dem Aktuator gekoppelt. Dadurch lässt sich das Schubumluftventil in Abhängigkeit von der Stellgeschwindigkeit des Aktuators betätigen.

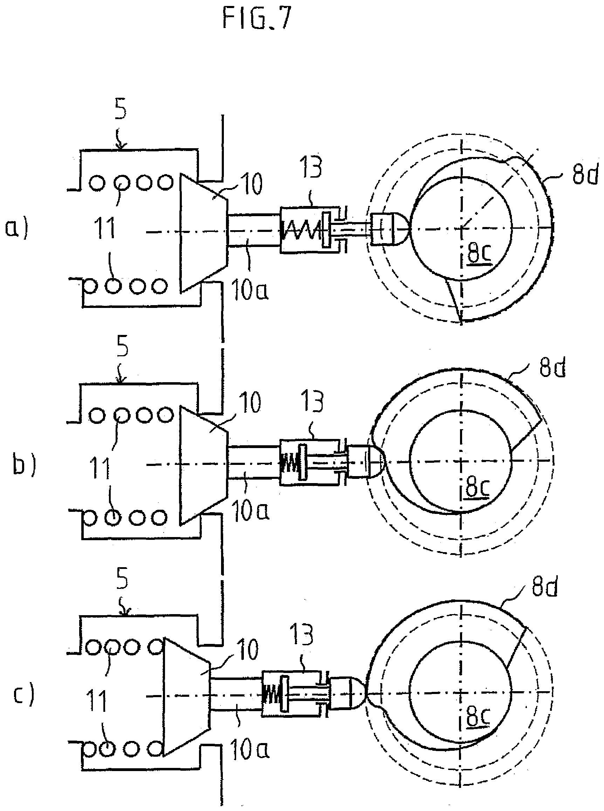

Eine mögliche Ausführung eines erfindungsgemäßen Abgasturboladers ist in der Figur 7 veranschaulicht. Diese zeigt eine Darstellungen eines mittels eines Dämpfers 13 mit dem Aktuator gekoppelten Schubumluftventils in drei verschiedenen Winkelstellungen der Abtriebswelle des Aktuators. So befindet sich in den in den Figuren 7a und 7b gezeigten Winkelstellungen das Schubumluftventil jeweils im geschlossenen Zustand. In der in der Figur 7c gezeigte Winkelstellung befindet sich das Schubumluftventil im geöffneten Zustand. Bei dem in den Figuren 7a, 7b und 7c gezeigten Dämpfer 13 handelt es sich um einen Lineardämpfer.

Die Figur 8 zeigt Diagramme zur Veranschaulichung des Zusammenhangs zwischen dem Aktuatorwinkel und dem Öffnungsverhalten des Wastegateventils und des Schubumluftventils der in Figur 7 dargestellten Ausführung bei geringer Stellgeschwindigkeit des Aktuators. Dabei ist in der Figur 8a die Drehgeschwindigkeit der Abtriebswelle des Aktuators, in der Figur 8b das Öffnungsverhalten des Schubumluftventils, in der Figur 8c das Öffnungsverhalten des Wastegateventils und in der Figur 8d der Stangenhub der Regelstange des Aktuators gezeigt, wobei jeweils längs der Abszisse der Drehwinkel α der Abtriebswelle des Aktuators aufgetragen ist.

Es ist ersichtlich, dass dann, wenn das Wastegateventil aus der geschlossenen Position langsam, d. h. mit einer Drehgeschwindigkeit der Abtriebswelle, die kleiner ist als eine Grenzdrehgeschwindigkeit der Abtriebswelle, geöffnet wird, über den Dämpfer 13 lediglich eine kleine Kraft auf den Stößel 10 übertragen wird. Diese kleine Kraft reicht nicht dazu aus, das Schubumluftventil zu öffnen.

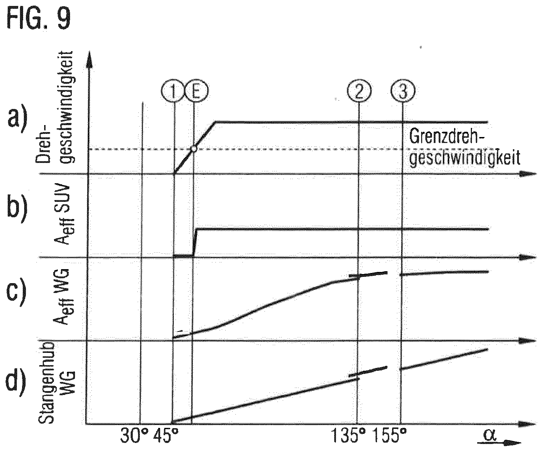

Die Figur 9 zeigt Diagramme zur Veranschaulichung des Zusammenhangs zwischen dem Aktuatorwinkel und dem Öffnungsverhalten des Wastegateventils und des Schubumluftventils der in Figur 7 dargestellten Ausführung bei hoher Stellgeschwindigkeit des Aktuators. Dabei ist in der Figur 9a die Drehgeschwindigkeit der Abtriebswelle des Aktuators, in der Figur 9b das Öffnungsverhalten des Schubumluftventils, in der Figur 9c das Öffnungsverhalten des Wastegateventils und in der Figur 9d der Stangenhub der Regelstange des Aktuators gezeigt, wobei jeweils längs der Abszisse der Drehwinkel α der Abtriebswelle des Aktuators aufgetragen ist.

Es ist ersichtlich, dass dann, wenn das Wastegateventil aus der geschlossenen Position schnell, d. h. mit einer Drehgeschwindigkeit der Abtriebswelle, die größer ist als eine Grenzgeschwindigkeit der Abtriebswelle, geöffnet wird, über den Dämpfer 13 eine Kraft übertragen wird, die groß genug ist, um das Schubumluftventil gegen die Federvorspannung zu öffnen. Dadurch kann aus einer beliebigen Stellung des Wastegateventils heraus das Wastegateventil und das Schubumluftventil gleichzeitig geöffnet werden. Dabei kann in vorteilhafter Weise das Schubumluftventil in der Endposition des Stellers von der mit einem Nocken ausgestatteten Scheibe aufgehalten werden.

## Patentansprüche

1. Abgasturbolader, welcher ein Wastegateventil und ein Schubumluftventil (5) aufweist, die von einem einzigen, gemeinsamen Aktuator (8) betätigbar sind, wobei die Betätigung des Schubumluftventils (5) von der Stellgeschwindigkeit des Aktuators (8) abhängig ist, **dadurch gekennzeichnet, dass** das Schubumluftventil (5) mittels eines Dämpfers (13) mit dem Aktuator (8) derart gekoppelt ist, dass bei einer geringen Stellgeschwindigkeit des Aktuators, die kleiner ist als eine Grenzdrehgeschwindigkeit einer Abtriebswelle des Aktuators, das Schubumluftventil geschlossen bleibt, und bei einer hohen Stellgeschwindigkeit des Aktuators, die größer ist als die Grenzdrehgeschwindigkeit der Abtriebswelle des Aktuators, das Schubumluftventil geöffnet wird, und dass die Öffnung des Schubumluftventils gegen eine Federvorspannung erfolgt.

2. Abgasturbolader nach Anspruch 1, **dadurch gekennzeichnet, dass** der Dämpfer ein Lineardämpfer ist.

3. Abgasturbolader nach einem der vorhergehenden Ansprüche, **dadurch gekennzeichnet, dass** die Betätigung des Wastegateventils und des Schubumluftventils zeitgleich erfolgt.

4. Abgasturbolader nach Anspruch 1 oder 2, **dadurch gekennzeichnet, dass** die Betätigung des Wastegateventils und des Schubumluftventils zeitverschieden erfolgt.

5. Abgasturbolader nach einem der vorhergehenden Ansprüche, **dadurch gekennzeichnet, dass** der Aktuator (8) eine elektrische Stellvorrichtung aufweist.

6. Abgasturbolader nach einem der vorhergehenden Ansprüche, **dadurch gekennzeichnet, dass** an der Abtriebswelle eine Scheibe (8c) vorgesehen ist und die Scheibe an ihrem radialen Außenmantel mit einem Nocken (8d) versehen ist.

7. Abgasturbolader nach Anspruch 6, **dadurch gekennzeichnet, dass** der Nocken (8d) zu einer Öffnung des Schubumluftventils (5) einen Stößel (10) betätigt.

## Claims

1. Exhaust-gas turbocharger which has a wastegate valve and an overrun air recirculation valve (5), which valves can be actuated by a single common actuator (8), wherein the actuation of the overrun air recirculation valve (5) is dependent on the positioning speed of the actuator (8), **characterized in that** the overrun air recirculation valve (5) is coupled to the actuator (8) via a damper (13) such that, in the case of a low positioning speed of the actuator lower than a threshold rotational speed of a drive output shaft of the actuator, the overrun air recirculation valve remains closed, and in the case of a high positioning speed of the actuator higher than the threshold rotational speed of the drive output shaft of the actuator, the overrun air recirculation valve is opened, and **in that** the opening of the overrun air recirculation valve takes place counter to a spring preload.

2. Exhaust-gas turbocharger according to Claim 1, **characterized in that** the damper is a linear damper.

3. Exhaust-gas turbocharger according to one of the preceding claims, **characterized in that** the actuation of the wastegate valve and of the overrun air recirculation valve is performed simultaneously.

4. Exhaust-gas turbocharger according to Claim 1 or 2, **characterized in that** the actuation of the wastegate valve and of the overrun air recirculation valve is performed at different times.

5. Exhaust-gas turbocharger according to one of the preceding claims, **characterized in that** the actuator (8) has an electric positioning device.

6. Exhaust-gas turbocharger according to one of the preceding claims, **characterized in that** a disk (8c) is provided on the drive output shaft, and the disk is provided, on its radially outer surface, with a cam (8d).

7. Exhaust-gas turbocharger according to Claim 6, **characterized in that** the cam (8d) actuates a plunger (10) for the purpose of opening the overrun air recirculation valve (5).

## Revendications

1. Turbocompresseur à gaz d'échappement, présentant une soupape de décharge et une soupape de circulation d'air en poussée (5), lesquelles peuvent être actionnées par un actionneur unique commun (8), l'actionnement de la soupape de circulation d'air en poussée (5) dépendant de la vitesse de réglage de l'actionneur (8), **caractérisé en ce que** la soupape de circulation d'air en poussée (5) est accouplée au moyen d'un amortisseur (13) à l'actionneur (8) de telle sorte qu'en cas de faible vitesse de réglage de l'actionneur, qui est inférieure à une vitesse de rotation limite d'un arbre de sortie de l'actionneur, la soupape de circulation d'air en poussée reste fermée, et que dans le cas d'une grande vitesse de réglage de l'actionneur, qui est supérieure à la vitesse de rotation limite de l'arbre de sortie de l'actionneur, la soupape de circulation d'air en poussée soit ouverte, et **en ce que** l'ouverture de la soupape de circulation d'air en poussée s'effectue à l'encontre d'une précontrainte de ressort.

2. Turbocompresseur à gaz d'échappement selon la revendication 1, **caractérisé en ce que** l'amortisseur est un amortisseur linéaire.

3. Turbocompresseur à gaz d'échappement selon l'une quelconque des revendications précédentes, **caractérisé en ce que** l'actionnement de la soupape de décharge et de la soupape de circulation d'air en poussée s'effectuent en même temps.

4. Turbocompresseur à gaz d'échappement selon la revendication 1 ou 2, **caractérisé en ce que** l'actionnement de la soupape de décharge et de la soupape de circulation d'air en poussée s'effectue de manière décalée dans le temps.

5. Turbocompresseur à gaz d'échappement selon l'une quelconque des revendications précédentes, **caractérisé en ce que** l'actionneur (8) présente un dispositif de commande électrique.

6. Turbocompresseur à gaz d'échappement selon l'une quelconque des revendications précédentes, **caractérisé en ce qu'**un disque (8c) est prévu au niveau de l'arbre de sortie, et le disque est pourvu d'une came (8d) au niveau de son enveloppe extérieure radiale.

7. Turbocompresseur à gaz d'échappement selon la revendication 6, **caractérisé en ce que** la came (8d) actionne un poussoir (10) en vue d'une ouverture de la soupape de circulation d'air en poussée (5).
